# FASCICULE DE BREVET EUROPEEN

(11) **EP 2 541 142 B1**
(45) Date de publication et mention de la délivrance du brevet: **05.08.2015**
(21) Numéro de dépôt: 12172062.7
(22) Date de dépôt: 14.06.2012
(51) Int. Cl.: F23C 5/28, F23L 15/02, F27D 99/00, F23D 14/66

(54) **Dispositif et procédé de gestion d'imbrûlés pour brûleurs régénératifs, brûleur comportant un tel dispositif**
Vorrichtung und Verfahren zur Steuerung unverbrannter Stoffe für regenerative Brenner, und mit einer solchen Vorrichtung ausgestatteter Brenner
Device and method for controlling unburnt substances for regenerative burners, burner comprising such a device

(30) Priorité: 27.06.2011 FR 1155701
(43) Date de publication de la demande: 02.01.2013
(73) Titulaire: Cockerill Maintenance & Ingénierie S.A., 4100 Seraing (BE)
(72) Inventeur: Braud, Yves, 85420 Damvix (FR); Ferrand, Ludovic, 78100 Saint-Germain-en-Laye (FR); Malpas, Luc, 4042 Liers (BE)
(74) Mandataire: Parzy, Benjamin Alain

(56) Documents cités:
- EP-A2- 0 322 678
- WO-A1-2010/007547
- US-A- 4 355 973
- US-A- 4 604 051
- US-A- 4 878 480
- US-A- 5 520 534

## Description

La présente invention concerne un dispositif et un procédé de gestion d'imbrûlés dans des circuits mettant en oeuvre un bac régénératif. Le dispositif et le procédé sont notamment destinés à être utilisés pour la régénération du gaz de haut fourneau. L'invention a également pour objet un brûleur régénératif comportant un tel dispositif.

On connaît des systèmes régénératifs qui permettent de préchauffer un gaz à faible pouvoir calorifique afin d'en augmenter la température de flamme. Par ce moyen, il est possible d'atteindre une température suffisante pour pouvoir exploiter ce gaz dans un process industriel. Ces systèmes permettent de valoriser des gaz pauvres, tels que les gaz de hauts fourneaux produits de manière accessoire lors du fonctionnement d'installations sidérurgiques. Cette exploitation présente le double avantage d'abaisser la facture énergétique d'une installation et d'éviter d'avoir à rejeter les gaz directement dans l'atmosphère, ces gaz ayant souvent un impact environnemental négatif.

Dans un système régénératif classique, deux brûleurs sont appairés et fonctionnent selon un cycle qui alterne une phase d'admission et une phase d'échappement. A cet effet, à chaque brûleur sont associés des conduits d'admission de combustible et de comburant et une conduite d'échappement des fumées. Des vannes pilotent l'ouverture des conduits pour que le brûleur alterne cycliquement une fonction de combustion dans laquelle un mélange de combustible et de comburant (le plus souvent de l'air) est injecté dans le brûleur qui enflamme celui-ci et une fonction d'échappement dans laquelle le brûleur, alors inactif, est simplement traversé par les fumées de combustion. Chaque brûleur est équipé d'un bac régénératif remplissant une fonction d'accumulateur thermique en :
- préchauffant le combustible qui le traverse en lui cédant de la chaleur, lors de la phase d'admission ;
- absorbant la chaleur des fumées d'échappement qui le traversent lors de la phase d'échappement.

Les fours mettant en oeuvre des systèmes régénératifs sur gaz pauvre émettent néanmoins des rejets relativement polluants de sorte qu'ils sont en fonction essentiellement en Asie, où la législation environnementale permet de tels rejets polluants. Des systèmes de post-combustion de type torchères ou de traitement des fumées avant rejet à l'atmosphère permettent de maîtriser le niveau de pollution liés aux rejets mais ont un impact non négligeable sur l'environnement ainsi que des coûts opérationnels (investissement, temps d'immobilisation de l'ensemble de l'unité de production pour l'installation et la maintenance de tels équipements) particulièrement élevés. EP0322678 A2 divulgue toutes les caractéristiques du préambule de la revendication 1.

Un but de l'invention est de fournir un moyen simple et économique de limiter la pollution engendrée par les installations pourvues de systèmes régénératifs.

Or, on s'est aperçu que le fonctionnement cyclique entraîne le rejet, avec les fumées d'échappement, du combustible imbrûlé contenu dans le bac régénératif et que ce rejet a une part relativement importante dans la pollution engendrée par les fours équipés de systèmes régénératifs.

L'invention vise à purger le bac régénératif du combustible qu'il contient avant la phase d'échappement et ainsi éviter le rejet de ce dernier à l'atmosphère. Cette solution est une alternative abordable aux coûteux dispositifs de postcombustion ou de traitement de rejets.

A cet effet, on prévoit, selon l'invention, un dispositif de gestion d'imbrûlés selon la revendication 1.

Selon l'invention, le circuit de purge est agencé pour purger également une conduite d'admission de combustible et comprend des moyens déprimogènes.

Ainsi, les produits rejetés lors de la phase d'échappement ne comprennent pas le résidu de combustible contenu dans le bac régénératif ni dans la conduite d'admission à la suite de la phase d'admission qui a précédé la phase d'échappement considérée. Le circuit de purge peut être connecté directement au bac régénératif ou à toute conduite qui est reliée à ce bac et qui peut être isolée du réseau, par exemple par un système de vannes. Cette souplesse rend l'implantation d'un tel système sur une installation existante aisée et apte à prendre en compte les sujétions constructives des équipements en place.

Selon l'invention, le combustible contenu dans le bac régénératif est dirigé vers la chambre de combustion afin d'y être brûlé.

On obtient alors une combustion de l'intégralité du combustible admis, un circuit de purge court, simple et aisé d'installation.

Idéalement, l'enceinte de combustion est celle d'un four de réchauffage participant à l'exploitation.

Le faible coût de fabrication et d'implantation d'un tel équipement, sa faculté à être mis en oeuvre sur une installation existante avec une durée d'immobilisation des équipements réduite, ainsi que l'amélioration immédiate du rendement énergétique et de l'impact environnemental des brûleurs équipés rendent cette alternative aux torchères et systèmes de traitement de fumées particulièrement attractive.

L'invention a également pour objet un procédé de gestion des imbrûlés au moyen d'un dispositif du type précité.

L'invention concerne enfin un brûleur régénératif comportant un dispositif du type précité.

D'autres caractéristiques et avantages de l'invention ressortiront à la lecture de la description qui suit de modes de réalisation particuliers non limitatifs de l'invention.

Il sera fait référence aux dessins annexés, parmi lesquels :

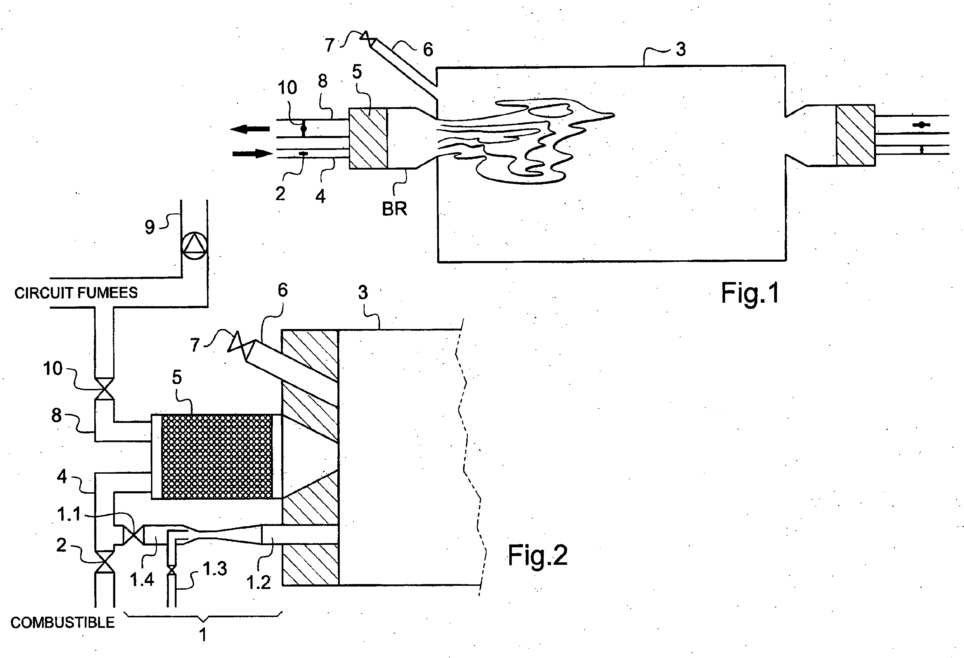

- la figure 1 est une vue d'un système de brûleurs régénératifs appairés, non équipés de l'invention ;
- la figure 2 est une vue d'un brûleur régénératif équipé de l'invention.

Le dispositif de gestion des imbrûlés est, ici, installé sur un brûleur régénératif généralement désigné BR destiné au préchauffage de gaz de haut fourneau.

Le brûleur régénératif BR comprend un bac régénératif 5 ayant une extrémité reliée à une conduite d'alimentation en combustible 4 dont l'ouverture est pilotée par une vanne d'admission [2], à une conduite d'échappement [8] dont l'ouverture est pilotée par une vanne d'échappement [10], et une extrémité opposée débouchant dans une enceinte de combustion 3.

L'enceinte de combustion 3 est alimentée en comburant (ici de l'air) via une conduite 6 d'alimentation en air de combustion pilotée par la vanne d'alimentation 7. Une conduite d'échappement 8 débouche depuis le bac régénératif 5 sur le circuit de rejet des fumées de combustion 9 dont l'accès est commandé par la vanne d'échappement 10.

Dans son principe général de fonctionnement, le brûleur alterne une phase d'admission et une phase d'échappement. Lors d'une phase d'admission, le bac régénératif 5 cède de la chaleur au combustible de sorte que l'enceinte reçoit de l'air de combustion et du combustible chauffé qui est brûlé dans l'enceinte. Lors de la phase d'échappement, une fois brûlé le combustible présent dans l'enceinte, le bac régénératif 5 voit transiter les fumées qui résultent de la combustion et qui cèdent de la chaleur au bac régénératif 5 avant d'être évacuées dans la conduite d'échappement 8. La phase d'admission peut alors reprendre et le cycle se poursuit.

Un circuit de purge généralement désigné 1 est, ici, implanté en aval de la vanne d'admission en combustible 2. Il se compose des éléments suivants :
- une vanne d'entrée du circuit de purge 1.1 ;
- une conduite 1.2 équipée d'un éjecteur à gaz 1.3 ;
- un capteur de fin de purge 1.4, ici sous la forme d'un capteur de température.

Le circuit de purge 1 relie l'enceinte de combustion 3 et, en aval de la vanne d'admission de combustible 2, la conduite d'admission 4. Cette disposition permet, comme il sera vu par la suite, la purge de l'intégralité du brûleur régénératif BR (bac régénératif 5 et conduite d'admission de combustible 4) et non du bac régénératif 5 seul.

Le fonctionnement du brûleur et du circuit de purge va maintenant être décrit de manière plus détaillée.

Le cycle de fonctionnement du brûleur régénératif débute par une phase d'admission. A l'état initial, les vannes d'admission 2, d'échappement 10, d'alimentation en air de combustion 7 et d'entrée du circuit de purge 1.1 sont fermées. La vanne d'admission en combustible 2 est ouverte, remplissant la conduite d'admission 4, le bac régénératif 5 et alimentant l'enceinte de combustion 3. Pendant que l'enceinte de combustion 3 est alimentée en une quantité de combustible déterminée, la vanne d'alimentation 7 est ouverte et fournit le volume requis d'air de combustion via la conduite d'alimentation en air de combustion 6. Les quantités requises d'air et de combustible ayant été introduites dans l'enceinte de combustion 3, les vannes 2 et 7 sont fermées. Ainsi, l'ensemble des vannes du système est dans un état fermé. Il importe de noter que la combustion ayant lieu dans l'enceinte 3, le combustible contenu dans la conduite d'alimentation 4 ainsi que dans le bac régénératif 5 n'est pas brûlé.

La combustion achevée, le brûleur régénératif passe par la phase de purge. La vanne d'entrée du circuit de purge 1.1 est ouverte. L'éjecteur à gaz 1.3 est mis en fonctionnement. Les fluides (combustible et fumées) en amont de celui-ci sont alors aspirés et dirigés vers l'enceinte de combustion 3 via la conduite 1.2. Le combustible présent dans le bac régénératif 5 et dans la conduite d'admission 4 est aspiré et remplacé par les fumées de combustion provenant de l'enceinte 3. Le combustible admis dans l'enceinte 3 s'enflamme pendant la phase de combustion du brûleur appairé. L'air de combustion nécessaire à la combustion du combustible purgé du circuit peut être fourni par la conduite 6 ou l'éjecteur à gaz 1.3. Une fois que le capteur de température 1.4 indique une élévation pérenne de la température témoignant de la présence permanente d'un flux de fumées, cela signifie que le bac régénératif 5 et la conduite 4 ont été purgés du combustible qu'ils retenaient.

La phase d'échappement peut alors débuter : la vanne d'entrée du circuit de purge 1.1 est fermée, la vanne d'échappement 10 est ouverte. Le circuit de rejet des fumées de combustion 9 étant en sous-pression, les fumées présentes dans la conduite d'alimentation 4, le bac régénératif 5, l'enceinte de combustion 3 et la conduite d'échappement 8 sont aspirées vers l'extérieur. Un nouveau cycle d'admission peut alors débuter. Ainsi, le combustible présent dans le bac régénératif 5 et la conduite d'admission 4 en fin de phase de combustion n'a pas été rejeté à l'échappement.

Bien entendu, l'invention n'est pas limitée aux modes de réalisation décrits mais englobe toute variante entrant dans le champ de l'invention telle que définie par les revendications.

En particulier :
- la vidange peut être effectuée à l'aide d'un éjecteur à gaz 1.3, un ventilateur de circulation ou tout autre moyen déprimogène ;
- le circuit de purge 1 peut alimenter : un circuit de convoyage de combustible indépendant, une autre enceinte de combustion, un autre bac régénératif;
- le combustible peut être un gaz, un liquide en suspension, un effluent de combustion ;
- le capteur de fin de purge 1.4 peut être un capteur de température, d'humidité, de pression, de résistivité ou tout autre paramètre permettant de distinguer le combustible ;
- le capteur de fin de purge 1.4 peut être implanté directement dans le bac régénératif, en tout point du circuit de purge, de la conduite d'alimentation ou d'échappement ;
- les dispositifs régulant l'admission, l'échappement, la connexion du circuit de purge, l'arrivée d'air de combustion peuvent être des vannes, robinets, registres, injecteurs, tiroirs ou tout autre moyen de commander un flux de fluide ;
- le circuit de purge peut être implanté en n'importe quel point de la conduite d'admission, d'échappement ou directement relié au bac régénératif.

## Revendications

1. Dispositif de gestion d'imbrûlés comprenant une conduite d'admission de combustible et un bac régénératif (5) ayant une extrémité reliable à une enceinte de combustion (3) et une extrémité opposée reliée à ladite conduite d'admission de combustible (4) et une conduite d'échappement de fumées (8), les conduites étant pourvues de vannes (2 ;10) pour alterner une phase d'admission et une phase d'échappement au travers du bac régénératif, le dispositif comprenant également un circuit de purge (1) relié au bac régénératif (5) pour purger ce dernier du combustible qu'il contient avant la phase d'échappement, **caractérisé en ce que** ledit circuit de purge (1) comprend des moyens déprimogènes et est agencé pour réaliser une purge du bac régénératif (5) et de ladite conduite d'admission de combustible (4) par aspiration de manière à remplacer le combustible qu'ils contiennent par des fumées de combustion provenant de l'enceinte de combustion (3)

2. Dispositif selon la revendication 1, dans lequel le circuit de purge (1) comprend un éjecteur à gaz (1.3).

3. Dispositif selon la revendication 1, dans lequel le circuit de purge (1) comprend un ventilateur de circulation.

4. Dispositif selon la revendication 1, dans lequel le circuit de purge (1) comprend une entrée reliée à l'aval de là vanne d'admission de combustible (2).

5. Dispositif selon la revendication 1, dans lequel le circuit de purge (1) comprend une entrée reliée à l'amont de la vanne d'échappement (10).

6. Dispositif selon la revendication 1, dans lequel le circuit de purge (1) est agencé pour diriger le combustible purgé vers une chambre de combustion (3).

7. Dispositif selon la revendication 1, comprenant un capteur (1.4) agencé pour détecter la purge de l'intégralité du combustible du bac régénératif (5).

8. Dispositif selon la revendication 7, dans lequel le capteur (1.4) est un capteur de température.

9. Procédé de gestion d'imbrûlés au moyen d'un dispositif selon la revendication 1 , le procédé comprenant l'étape de purger le bac régénératif (5) du combustible qu'il contient avant la phase d'échappement.

10. Procédé selon revendication 9, dans lequel la purge du bac régénératif (5) se fait par le transfert du combustible vers l'enceinte de combustion (3).

11. Procédé selon revendication 9, dans lequel la purge du bac régénératif (5) se fait par le transfert du combustible vers un autre circuit de convoyage de combustible.

12. Procédé selon revendication 9, dans lequel au moins une partie de la conduite d'admission du combustible est également purgé.

13. Brûleur régénératif pourvu d'un dispositif conforme à l'une quelconque des revendications 1 à 8.

## Patentansprüche

1. Vorrichtung zur Steuerung unverbrannter Stoffe, umfassend eine Brennstoffeinlassleitung und einen Regenerativbehälter (5), der ein Ende hat, das mit einer Brennkammer (3) verbindbar ist, sowie ein entgegengesetztes Ende, das mit der genannten Brennstoffeinlassleitung (4) und einer Rauchgasauslassleitung (8) verbunden ist, wobei die Leitungen mit Ventilen (2; 10) versehen sind, um eine Einlassphase mit einer Auslassphase durch den Regenerativbehälter hindurch abzuwechseln, wobei die Vorrichtung ferner einen Ableitungskreis (1) umfasst, der mit dem Regenerativbehälter (5) verbunden ist, um vor der Auslassphase aus diesem letztgenannten den Brennstoff abzuleiten, den er enthält, **dadurch gekennzeichnet, dass** der genannte Ableitungskreis (1) auf Unterdruck basierende Mittel umfasst und derart ausgebildet ist, dass er eine Entleerung des Regenerativbehälters (5) und der genannten Brennstoffeinlassleitung (4) durch Absaugung derart durchführt, dass er den Brennstoff, den diese enthalten, durch Verbrennungsrauchgase ersetzt, die aus der Brennkammer (3) stammen.

2. Vorrichtung nach Anspruch 1, wobei der Ableitungskreis (1) eine Gasstrahlpumpe (1.3) umfasst.

3. Vorrichtung nach Anspruch 1, wobei der Ableitungskreis (1) einen Umlüfter umfasst.

4. Vorrichtung nach Anspruch 1, wobei der Ableitungskreis (1) einen Einlass umfasst, der stromabwärts des Brennstoffeinlassventils (2) angeschlossen ist.

5. Vorrichtung nach Anspruch 1, wobei der Ableitungskreis (1) einen Einlass umfasst, der stromaufwärts des Auslassventils (10) angeschlossen ist.

6. Vorrichtung nach Anspruch 1, wobei der Ableitungskreis (1) derart ausgebildet ist, dass er den abgeleiteten Brennstoff zu einer Brennkammer (3) leitet.

7. Vorrichtung nach Anspruch 1, umfassend einen Sensor (1.4), der so ausgebildet ist, dass er die Ableitung des gesamten Brennstoffes aus dem Regenerativbehälter (5) erfasst.

8. Vorrichtung nach Anspruch 7, wobei der Sensor (1.4) ein Temperatursensor ist.

9. Verfahren zur Steuerung unverbrannter Stoffe mittels einer Vorrichtung nach Anspruch 1, wobei das Verfahren vor der Auslassphase den Schritt des Ableitens des Brennstoffes, den der Regenerativbehälter (5) enthält, aus diesem Regenerativbehälter (5) umfasst.

10. Verfahren nach Anspruch 9, wobei die Entleerung des Regenerativbehälters (5) durch die Übertragung des Brennstoffes in Richtung der Brennkammer (3) erfolgt.

11. Verfahren nach Anspruch 9, wobei die Entleerung des Regenerativbehälters (5) durch die Übertragung des Brennstoffes zu einem anderen Brennstoffförderkreis erfolgt.

12. Verfahren nach Anspruch 9, wobei mindestens ein Teil der Brennstoffeinlassleitung ebenfalls entleert wird.

13. Regenerativbrenner, der mit einer Vorrichtung gemäß einem der Ansprüche 1 bis 8 versehen ist.

## Claims

1. A device for managing unburned residues, the device comprising fuel admission pipe and a regenerator (5) having one end connectable to a combustion enclosure (3) and an opposite end connected to said fuel admission pipe (4) and a flue gas exhaust pipe (8), the pipes being fitted with valves (2; 10) to alternate between an admission stage and an exhaust stage through the regenerator, the device also comprising a purge circuit (1) connected to the regenerator (5) to purge it of the fuel it contains prior to the exhaust stage, **characterized in that** said purge circuit (1) includes suction-generator means and is arranged to purge the regenerator and said fuel admission pipe (4) by sucking out and replacing the fuel they contain by combustion gas coming from the enclosure (3).

2. A device according to claim 1, wherein the purge circuit (1) includes a gas ejector (1.3).

3. A device according to claim 1, wherein the purge circuit (1) includes a circulation fan.

4. A device according to claim 1, wherein the purge circuit (1) includes an inlet connected to the downstream end of the fuel admission valve (2).

5. A device according to claim 1, wherein the purge circuit (1) includes an inlet connected to the upstream end of the exhaust valve (10).

6. A device according to claim 1, wherein the purge circuit (1) is arranged to direct the purged fuel to a combustion chamber (3).

7. A device according to claim 1, having a sensor (1.4) arranged to detect when all of the fuel has been purged from the regenerator (5).

8. A device according to claim 7, wherein the sensor (1.4) is a temperature sensor.

9. A method of managing unburned residues by means of a device according to claim 1, the method comprising the step of purging a regenerator (5) of the fuel that it contains prior to the exhaust stage.

10. A method according to claim 9, wherein the regenerator (5) is purged by transferring the fuel to the combustion enclosure (3).

11. A method according to claim 9, wherein the regenerator (5) is purged by transferring the fuel to another circuit for conveying fuel.

12. A method according to claim 9, wherein at least a portion of the fuel admission duct is also purged.

13. A regenerative burner provided with a device in accordance with claim 1.
